(19) Europäisches Patentamt
European Patent Office
Office européen des brevets

(11) **EP 1 879 320 A1**

(12) **EUROPEAN PATENT APPLICATION**
published in accordance with Art. 153(4) EPC

(43) Date of publication:
**16.01.2008 Bulletin 2008/03**

(51) Int Cl.:
*H04J 15/00* (2006.01)    *H04B 7/04* (2006.01)

(21) Application number: **06747084.9**

(22) Date of filing: **01.06.2006**

(86) International application number:
**PCT/JP2006/310982**

(87) International publication number:
**WO 2006/129750 (07.12.2006 Gazette 2006/49)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.06.2005 JP 2005163701**

(71) Applicant: **MATSUSHITA ELECTRIC INDUSTRIAL CO., LTD.**
**Osaka 571-8501 (JP)**

(72) Inventors:
• **KIMURA, Ryohei**
**Matsushita Electric Industrial Co.,Ltd**
**2-1-61, Shiromi, Chuo-ku, Osaka 540-6207 (JP)**
• **HOSHINO, Masayuki**
**Matsushita Electric Industrial Co.,Ltd**
**2-1-61, Shiromi, Chuo-ku, Osaka 540-6207 (JP)**

• **IMAI, Tomohiro**
**Matsushita Electric Industrial Co.,Ltd**
**2-1-61, Shiromi, Chuo-ku, Osaka 540-6207 (JP)**
• **MIYOSHI, Kenichi**
**Matsushita Electric Industrial Co.,Ltd**
**2-1-61, Shiromi, Chuo-ku, Osaka 540-6207 (JP)**
• **YUDA, Yasuaki**
**Matsushita Electric Industrial Co.,Ltd**
**2-1-61, Shiromi, Chuo-ku, Osaka 540-6207 (JP)**

(74) Representative: **Grünecker, Kinkeldey, Stockmair & Schwanhäusser**
**Anwaltssozietät**
**Maximilianstrasse 58**
**80538 München (DE)**

(54) **RADIO TRANSMITTER, RADIO RECEIVER AND SYMBOL ARRANGING METHOD**

(57)    A symbol arranging method by which a processing load due to channel estimation forMIMO channels can be reduced. In the method, a symbol is arranged for a transmission frame format having a pilot area and a data area. The pilot symbol is arranged in the pilot area. An ICE data symbol used for iterative channel estimation (ICE) is arranged in an ICE data area in the data area. The MIMO data symbol not used for ICE is arranged in the MIMO data area in the data area.

FIG.4

**Description**

Technical Field

The present invention relates to a radio transmitting apparatus, radio receiving apparatus and signal mapping method used in radio communication in the MIMO (Multiple-Input Multiple-Output) system.

Background Art

In recent years, as a technical approach that realizes high rate data transmission in radio communication, the MIMO (Multi Input Multi Output) system has attracted attention. For example, in the MIMO system disclosed in Patent Document 1, a plurality of data streams are transmitted through MIMO channels, in other words, a plurality of data streams are transmitted in parallel from a transmitter having a plurality of antennas to a receiver having a plurality of antennas.

It is important to perform propagation path characteristic estimation (i.e. channel estimation) of a radio channel with a high degree of accuracy to improve transmission rate more reliably. Up till now, variable channel estimating methods have been proposed.

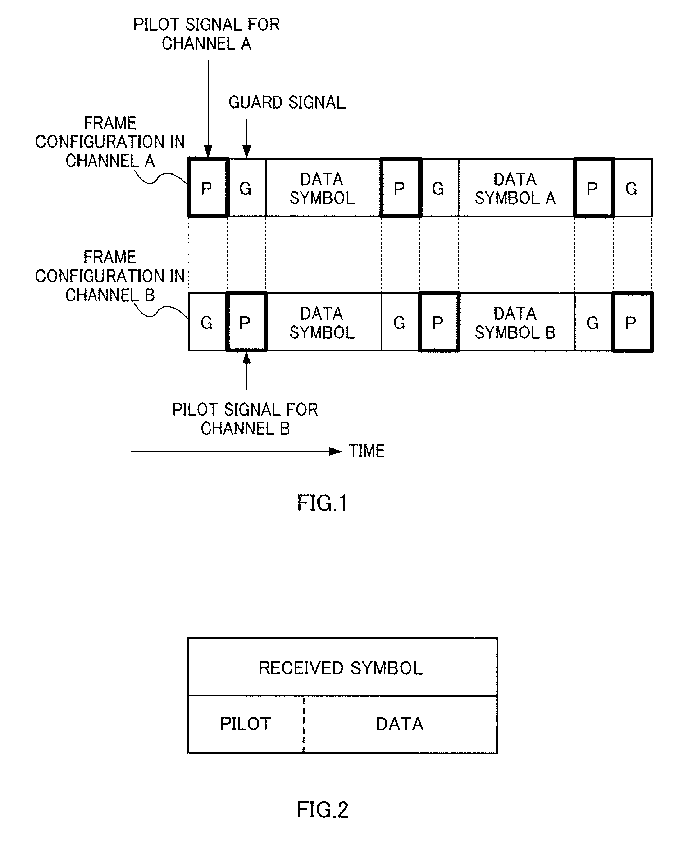

For example, in the channel estimating method disclosed in Patent Document 2, frame formats shown in FIG. 1 are used. Specifically, a pilot signal (referred to as "P" in FIG. 1) used in channel estimation is inserted in a data signal sequence, and moreover, the pilot signal used for estimating each channel is multiplexed by time division in the insertion period. When this pilot signal is used for channel estimation, it is possible to prevent channel interference upon estimating a channel and improve accuracy of channel estimation. However, when the cycle of fading fluctuation is shorter than the cycle of the pilot signal insertion period, this channel estimating method may not be responsive to fading fluctuation. In this case, a pilot signal is a known signal for a receiver and a data signal is an unknown signal for a receiver.

For example, for the channel estimating method disclosed in Patent Document 3, iterative channel estimation is performed to improve response to fading fluctuation. Specifically, after normal channel estimation (hereinafter channel estimation using a pilot signal is referred to as "first channel estimation" and channel estimation using a data signal is referred to as "iterative channel estimation") is performed using the pilot signal in the received symbol having the frame format shown in FIG.2, the data signal in the received symbol is tentatively decided based on the result of that channel estimation (the result of the first channel estimation). Further, iterative channel estimation is performed using the tentative decision value of the data signal. By combining the result of iterative channel estimation and the result of the first channel estimation, a conclusive result of channel estimation can be obtained.

Patent Document 1: Japanese Patent Application Laid-Open No. 2002-217752

Patent Document 2: Japanese Patent Application Laid-Open No.2003-338802

Patent Document 3: Japanese Patent Application Laid-Open No . 2000-82978

Disclosure of Invention

Problems to be Solved by the Invention

However, the above-described iterative channel estimation is an example of applying channel estimation to the SIMO (Single-Input Multiple-Output) channel. If this channel estimation method is applied to the MIMO channel, to estimate channel gain for a stream transmitted from an antenna out of a plurality of streams in a received signal, a complicated processing is required where individual received replicas of other streams are generated and these received replicas are subtracted from the received signal. Further, inprioriterative channel estimation, all data streams are tentatively decided. Therefore, there is a problem that processing load significantly increases.

It is therefore an object of the present invention to provide a radio transmitting apparatus, radio receiving apparatus and signal mapping method that can reduce processing load of channel estimation for the MIMO channel.

Means for Solving the Problem

A radio transmitting apparatus of the present invention that transmits a transmission signal including a pilot signal period and a data signal period, the radio transmitting apparatus employs a configuration having: a plurality of antennas; a generating section that generates the transmission signal by mapping a first data signal used in iterative channel estimation to a first period in the data signal period and a second data signal not used in iterative channel estimation to a second period in the data signal period; and a transmission section that transmits the transmission signal generated by the generating section from the plurality of antennas.

A radio receiving apparatus of the present invention employs a configuration having: a plurality of antennas; a receiving section that receives by the plurality of antennas a received signal comprising a pilot signal period and a data signal period where a first data signal is mapped to a first period in the data period and a second data signal is mapped to a second period in the data period; and a channel estimating section that performs iterative channel estimation using only the first data signal, out of the first data signal and the second data signal.

A signal mapping method of the present invention that maps a signal to a frame format having a pilot signal period and data signal period, the method includes the steps of: mapping a pilot signal to the pilot signal period; mapping a first data signal used in iterative channel estimation to a first period in the data signal period; and mapping a second signal not used in iterative channel estimation to a second period in the data signal period.

Advantageous Effect of the Invention

According to the present invention, it is possible to reduce processing load of channel estimation for the MIMO channel.

Brief Description of Drawings

FIG.1 illustrates one example of a transmission frame format of related art;
FIG.2 illustrates another example of a transmission frame format of related art;
FIG.3 is a block diagram showing a configuration of a radio transmitting apparatus according to Embodiment 1 of the present invention;
FIG.4 illustrates a transmission frame format from the aspect of time and space according to Embodiment 1 of the present invention;
FIG.5 illustrates a transmission frame format from the aspect of time and power according to Embodiment 1 of the present invention;
FIG.6 is a block diagram showing a configuration of a radio receiving apparatus according to Embodiment 1 of the present invention;
FIG.7 illustrates an example of a variation of a configuration of a radio receiving apparatus according to Embodiment 1 of the present invention;
FIG.8 is a block diagram showing a configuration of a radio transmitting apparatus according to Embodiment 2 of the present invention;
FIG.9 illustrates a transmission frame format from the aspect of time and power according to Embodiment 2 of the present invention;
FIG.10 is a block diagram showing a configuration of a radio transmitting apparatus according to Embodiment 3 of the present invention;
FIG.11 illustrates a transmission frame format from the aspect of time and space according to Embodiment 3 of the present invention;
FIG.12 illustrates a transmission frame format from the aspect of time and power according to Embodiment 3 of the present invention;
FIG.13 illustrates an example of a variation of a transmission frame format from the aspect of time and space according to Embodiment 3 of the present invention;
FIG.14 illustrates an example of a variation of a transmission frame format from the aspect of time and power according to Embodiment 3 of the present invention;
FIG.15 is a block diagram showing a configuration of a radio receiving apparatus according to Embodiment 3 of the present invention;
FIG.16 is a block diagram showing a configuration of a radio transmitting apparatus according to Embodiment 4 of the present invention;
FIG.17 illustrates a transmission frame format from the aspect of time and space according to Embodiment 4 of the present invention;
FIG. 18A illustrates a transmission frame format from the aspect of time and power according to Embodiment 4 of the present invention;
FIG.18B illustrates a transmission frame format from the aspect of time and power according to Embodiment 4 of the present invention;
FIG.19 is a block diagram showing a configuration of a radio receiving apparatus according to Embodiment 4 of the present invention;

FIG.20A illustrates a DICE extracting operation according to Embodiment 4 of the present invention;

FIG.20B illustrates a DICE extracting operation according to Embodiment 4 of the present invention;

FIG.20C illustrates a DICE extracting operation according to Embodiment 4 of the present invention; and

FIG.20D illustrates a DICE extracting operation according to Embodiment 4 of the present invention.

Best Mode for Carrying Out the Invention

Embodiments of the present invention will be described in detail below with reference to the accompanying drawings.

(Embodiment 1)

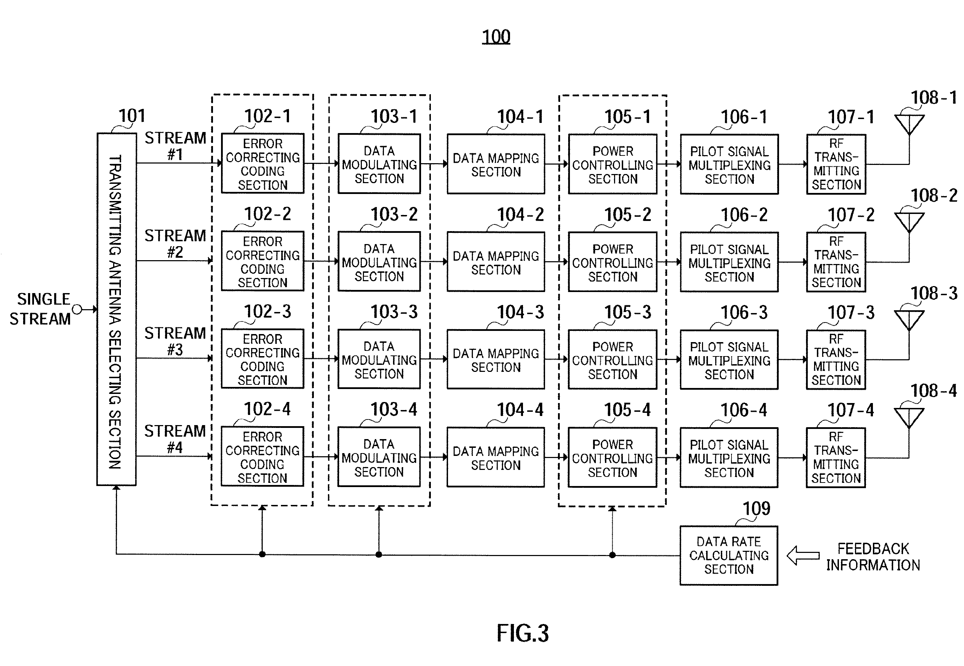

FIG.3 is a block diagram showing the configuration of the radio transmitting apparatus according to Embodiment 1 of the present invention. Radio transmitting apparatus 100 has transmitting antenna selecting section 101, error correcting coding sections 102-1, 102-2, 102-3 and 102-4, data modulating sections 103-1, 103-2, 103-3 and 103-4, data mapping sections 104-1, 104-2, 104-3 and 104-4, power controlling sections 105-1, 105-2, 105-3 and 105-4, pilot signal multiplexing sections 106-1, 106-2, 106-3 and 106-4, RF transmitting sections 107-1, 107-2, 107-3 and 107-4, antennas 108-1, 108-2, 108-3 and 108-4 and data rate calculating section 109.

Although a case will be described with the present embodiment where a transmitter (radio transmitting apparatus 100) and a receiver (radio receiving apparatus 150, described later) each having four antennas are used as an example and radio communication is performed using the 4x4 MIMO channel, the present invention is equally applicable to transmitters and receivers having two or more antennas and forming MIMO channels.

Further, error correcting coding sections 102-1 to 102-4 have the same configuration. Therefore, any of these will be referred to as "error correcting coding section 102-a" ("a" is an integer between 1 and 4). Further, data modulating sections 103-1 to 103-4 have the same configuration. Therefore, any of these will be referred to "data modulating section 103-a". Further, data mapping sections 104-1 to 104-4 have the same configuration. Therefore, any of these will be referred to as "data mapping section 104-a". Further, power controlling sections 105-1 to 105-4 have the same configuration. Therefore, any of these will be referred to as "electric controlling section 105-a". Further, pilot signal multiplexing sections 106-1 to 106-4 have the same configuration. Therefore, any of these will be referred to as "pilot multiplexing section 106-a". Further, RF transmitting sections 107-1 to 107-4 have the same configuration. Therefore, any of these will be referred to as "RF transmitting section 107-a". Further, antennas 108-1 to 108-4 have the same configuration. Therefore, any of these will be referred to as "antenna 108-a".

Data rate calculating section 109 calculates a data rate in accordance with the number of transmitting antennas, based on CQI (Channel Quality Indicator) per antenna reported in feedback information from radio receiving apparatus 150. Further, data rate calculating section 109 determines the number of transmitting antennas where the data rate is maximum, and selects the determined number of antennas from antennas 108-1 to 108-4 . Out of the pilot signal used in the first channel estimation at radio receiving apparatus 150, the data signal not used in ICE (Iterative Channel Estimation) at radio receiving apparatus 150 (MIMO data signal) and the data signal used in iterative channel estimation at radio receiving apparatus 150 (ICE data signal), data rate calculation is performed only with respect to the MIMO data signal. CQI per antenna is transmitted from radio transmitting apparatus 100 to radio receiving apparatus 150 in feedforward information in accordance with the transmission signal.

Here, CQI represents channel quality. Channel quality may be also referred to as "CSI" (Channel State Information).

Transmitting antenna selecting section 101 sorts a single stream into substreams corresponding to individual antennas 108-1 to 108-4, according to antenna selection results in data rate calculating section 109. This single stream is a single signal sequence composed of singles to be transmitted to radio receiving apparatus 150. Further, a substream corresponding to antenna 108-a will be referred to as "stream #a". That is, stream #a is a signal sequence including the data signal to be transmitted from antenna 108-a.

Error correcting coding section 102-a performs error correcting coding on stream #a sorted by transmitting antenna selecting section 101. An adequate coding rate for CQI is used in error correcting coding.

Data modulating section 103-a modulates stream #a after error correcting coding. An adequate modulation scheme (for example, QPSK and 16QAM) for CQI is used in modulation.

Data mapping section 104-a maps the modulated stream #a in a predetermined transmission frame format. Specifically, data mapping section 104-a maps a data signal provided in stream #a (hereinafter "D#a") in the MIMO data period and ICE data period. A detailed mapping operation will be described later.

Power controlling section 105-a controls transmission power of stream #a mapped in the transmission frame format. A detailed transmission power controlling operation will be described later.

By mapping the pilot signal to be transmitted from antenna 108-a (hereinafter "P#a") in the transmission frame format, pilot signal multiplexing section 106-a multiplexes P#a to D#a. A detailed multiplexing operation will be described later. The combination of data mapping section 104-a and pilot signal multiplexing section 106-a form a generating section where a transmission signal is generated by mapping the ICE data signal, the MIMO data signal and the pilot signal to the ICE data period, the MIMO data period and the pilot period, respectively.

RF transmitting section 107-a performs predetermined RF transmitting processing including up-conversion on stream #a with multiplexed P#a and transmits the signal after RF transmitting processing from antenna 108-1.

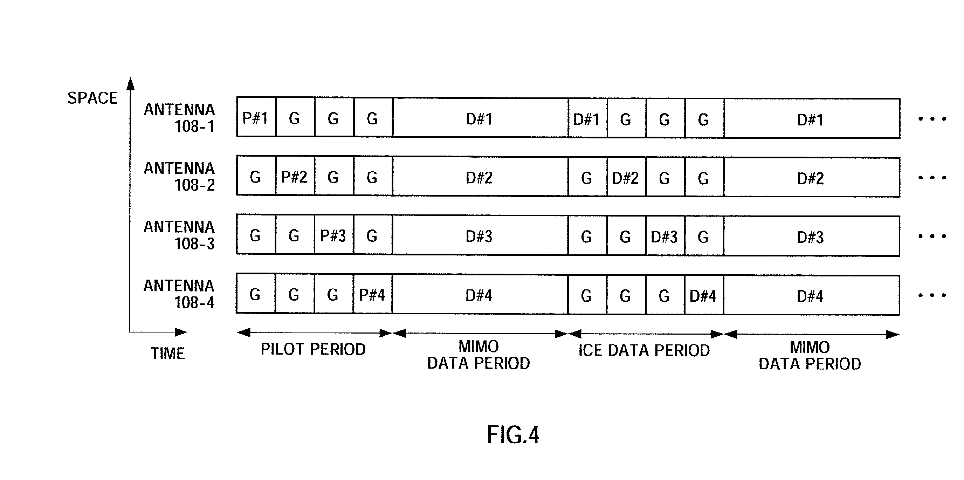

Here, examples of mapping processing and multiplexing processing will be explained in detail using the transmission frame format shown in FIG.4.

FIG.4 illustrates the transmission frame format of transmission signal for one frame using time axis and space axis. Here, the transmission signal shown as an example has a pilot period and a data period, and the data period is composed of a MIMO data period and an ICE data period. The ICE data period is formed into an ICEZ (Iterative Channel Estimation Zone) which is a designated area, that is, positions (timings) where ICE data signals are inserted. The pilot period and the ICE data period are placed apart each other. Further, a MIMO data period is placed between the pilot period and the ICE data period. Further, the MIMO data period is placed immediately before and immediately after the ICE data period.

If antenna 108-a is selected by data rate calculating section 109, data mapping section 104-a maps D#a in all MIMO data periods for the transmission signal transmitted by antenna 108-a. D#a mapped in the MIMO data period is the MIMO data signal and is not used in iterative channel estimation. Further, if antenna 108-a is not selected, data mapping section 104-a does not map D#a in all MIMO data periods of the transmission signal transmitted by antenna 108-a.

Further, data mapping section 104-a maps D#a in the period allocated for stream #a in the ICE data period (allocation period #a). D#a mapped in allocation period #a is the ICE data signal and is used in iterative channel estimation. Allocation period #a for data mapping section 104-a is a non-allocation period for other data mapping sections. Therefore, other data mapping sections do not map anything in the non-allocation period. In other words, a guard signal ("G") is mapped in a non-allocation period. Therefore, it is possible to prevent an ICE data signal provided in a substream from interference by other substreams, improve the reliability of the tentative decision value of ICE data signal (received quality) and improve accuracy of channel estimation.

Further, in ICE data periods, data mapping sections 104-1 to 104-4 map D#1 to D#4 in non-overlapping parts. Therefore, it is possible to prevent the ICE data signal provided in each substream from interference by other substreams and improve the reliability of tentative decision values of all ICE data signals.

Further, by mapping P#1 to P#4 in respective predetermined parts in the pilot period, pilot signal multiplexing sections 106-1 to 106-4 perform time division multiplex on P#1 to P#4.

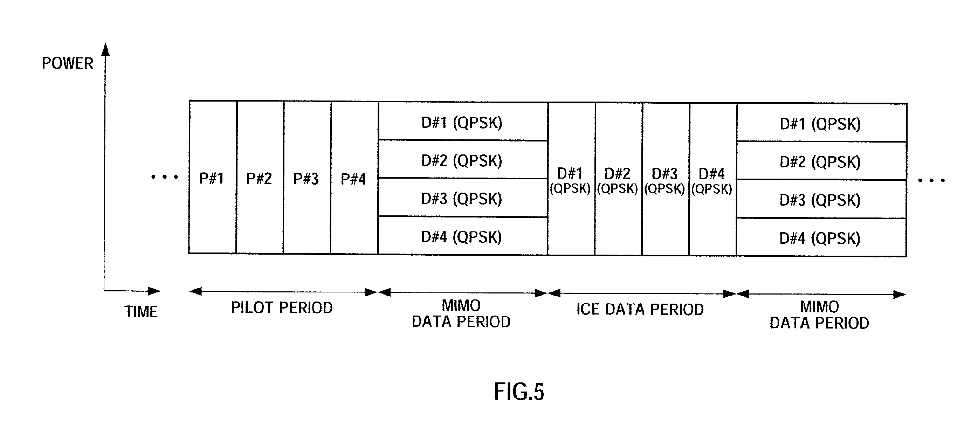

Next, an example of transmission processing will be explained in more detail using the transmission frame format shown in FIG.5. FIG.5 illustrates the transmission frame format shown in FIG.4 using time axis and axis showing the magnitude of power.

Power controlling sections 105-1 to 105-4 maintains transmission power in data periods at constant. In the MIMO data period, power controlling sections 105-1 to 105-4 allocate predetermined total transmission power to substreams according to the selection result at data rate calculating section 109. When a plurality of antennas are selected, transmission power is evenly allocated to the selected antennas. Further, in the ICE data period, power controlling sections 105-1 to 105-4 allocate all of total transmission power to one of substreams. Therefore, when a plurality of antennas are selected by data rate calculating section 109, the transmission power in the ICE data period in stream #n increases more than the transmission power in the MIMO data period in stream #a. Therefore, it is possible to increase the reliability of tentative decision values of ICE data signals.

In this case, although all data signals are modulated in QPSK, data signals may be modulated in other modulation schemes. Further, although the transmission power of the pilot period is equal to the transmission power of the data period, the transmission power of the pilot period may be different from the transmission power of the data period.

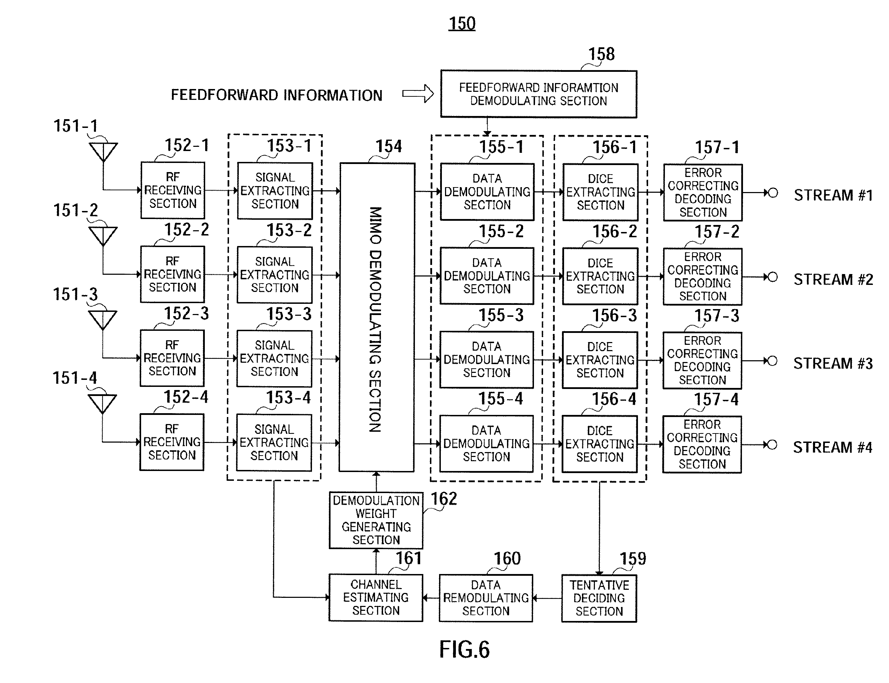

FIG. 6 is a block diagram showing the configuration of the radio receiving apparatus according to Embodiment 1 of the present invention. Radio receiving apparatus 150 in FIG.6 has antennas 151-1, 151-2, 151-3 and 151-4, RF receiving sections 152-1, 152-2, 152-3 and 152-4, signal extracting sections 153-1, 153-2, 153-3 and 153-4, MIMO demodulating section 154, data demodulating sections 155-1, 155-2, 155-3 and 155-4, DICE extracting sections 156-1, 156-2, 156-3 and 156-4, error correcting decoding sections 157-1, 157-2, 157-3 and 157-4, feedforward information demodulating section 158, tentative deciding section 159, data remodulating section 160, channel estimating section 161 and demodulation weight generating section 162.

Further, antennas 151-1 to 151-4 have the same configuration. Therefore, any of these will be referred to as "antenna 151-b" ("b" is an integer between 1 and 4). Further, RF receiving sections 152-1 to 152-4 have the same configuration. Therefore, any of these will be referred to as "RF receiving section 152-b". Further, signal extracting sections 153-1 to 153-4 have the same configuration. Therefore, any of these will be referred to as "signal extracting section 153-b". Further, data demodulating sections 155-1 to 155-4 have the same configuration. Therefore, any of these will be referred to as "data demodulating section 155-b". Further, DICE extracting sections 156-1 to 156-4 have the same configuration. Therefore, any of these will be referred to as "DICE extracting section 156-b". Further, error correcting decoding sections 157-1 to 157-4 have the same configuration. Therefore, any of these will be referred to as "error correcting decoding section 157-b".

Feed forward information demodulating section 158 demodulates CQI transmitted from radio transmitting section 100 in feedforward information.

RF receiving section 152-b receives a radio signal through antenna 151-b, performs predetermined RF receiving processing including down-conversion on the received signal and obtains a baseband signal (BB#b).

Signal extracting section 153-b extracts a pilot signal from BB#b and generates a copy of the ICE data signal. After the pilot signal is extracted, BB#b is outputted to MIMO demodulating section 154, and the extracted pilot signal and the generated copy are outputted to channel estimating section 161.

MIMO demodulating section 154 performs MIMO demodulation on all baseband signals inputted from signal extracting sections 153-1 to 153-4, using the demodulation weight generated by demodulation weight generating section 162. By doing so, substreams corresponding to individual antennas 152-1 to 152-4 are obtained. Hereinafter each substream will be referred to as "stream #b". Stream #b is outputted to data demodulating section 155-b.

Data demodulating section 155-b demodulates stream #b in the modulation scheme adequate to CQI demodulated by feedforward information demodulating section 158.

DICE (data for iterative estimation) extracting section 156-b extracts the ICE data signal from demodulated stream #b. After the ICE data signal is extracted, stream #b is outputted to error correcting decoding section 157-b, and the extracted ICE data signal is outputted to tentative deciding section 159.

Error correcting decoding section 157-b performs error correcting decoding on stream #b inputted from DICE extracting section 156-b.

Tentative deciding section 159 obtains tentative decision values by temporarily determining ICE data signals inputted from DICE extracting sections 156-1 to 156-4.

Data remodulating section 160 remodulates the obtained tentative decision values in the same modulation scheme as that used at radio transmitting apparatus 100. The remodulated data signal generated by remodulation is outputted to channel estimating section 161.

Channel estimating section 161 performs channel estimation described later, and obtains channel estimation value.

Demodulation weight generating section 162 generates demodulation weight used in computation processing upon MIMO demodulation (for example, ZF (Zero Forcing) computation andMMSE (MinimumMean Square Error) computation), based on the channel estimation value. Further, when MIMO demodulation is performed using MLD (Maximum Likelihood Detection), demodulation weight needs not to be generated.

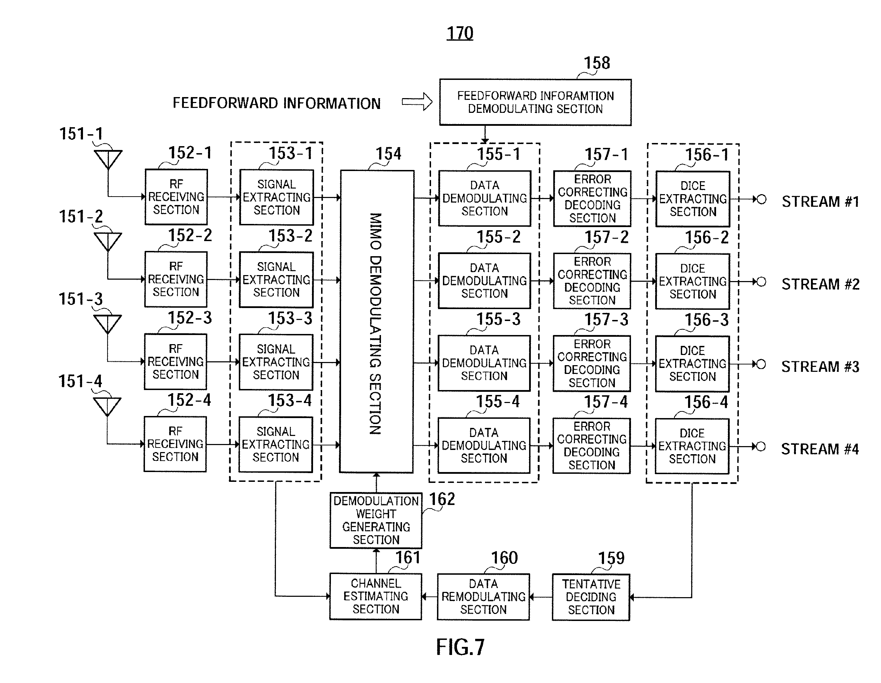

Here, when a different configuration from the configuration of radio receiving apparatus 150 described above is employed, it is equally possible to receive a transmission signal transmitted from radio transmitting apparatus 100 through the MIMO channel. For example, radio receiving apparatus 170 shown in FIG.7 can be used. Radio receiving apparatus 170 is an example of a variation of radio receiving apparatus 150. In radio receiving apparatus 170, error correcting decoding sections 157-1 to 157-4 are placed after data demodulating sections 155-1 to 155-4, and DICE extracting sections 156-1 to 156-4 are placed after error correcting decoding sections 157-1 to 157-4.

Here, iterative channel estimation performed by channel estimating section 161 of radio receiving apparatus 150 will be described in detail.

Received signal R after RF receiving sections 152-1 to 152-4 can be represented by following equation 1 or 2.

[1]

$$\mathbf{R} = \mathbf{HX} + \mathbf{N} \quad \text{...(Equation 1)}$$

[2]

$$\mathbf{R} = \begin{pmatrix} r_1 & r_2 & r_3 & r_4 \end{pmatrix}^T = [r_n]_{4 \times 1} \quad \text{...(Equation 2)}$$

Here, "**H**" is the channel matrix, "**X**" is the transmission signal and "**N**" is the thermal noise component. Further, transmission signal **X** represents pilot signal $\mathbf{X}_{(p)k}$, MIMO data signal $\mathbf{X}_{(d)k}$ and ICE data signal $\mathbf{X}_{(DICE)K}$ as a whole. Channel matrix H, transmission signal X, thermal noise component N, pilot signal $\mathbf{X}_{(p)k}$, MIMO data signal $\mathbf{X}_{(d)k}$ and ICE data signal $\mathbf{X}_{(DICE)k}$ can be represented by following equations 3 to 8, respectively. Here, "n" is the receiving antenna number (with the present embodiment, "n" is an integer between 1 and 4), "m" is the transmitting antenna number (with the present embodiment, "m" is an integer between 1 and 4) and "k" is the symbol number in the time domain.

[3]

$$\mathbf{H} = \left[ h_{nm} \right]_{4\times4} \quad \ldots(\mathrm{Equation\ 3})$$

[4]

$$\mathbf{X} = \left[ x_{m} \right]_{4\times1} \quad \ldots(\mathrm{Equation\ 4})$$

[5]

$$\mathbf{N} = \left[ n_{n} \right]_{4\times1} \quad \ldots(\mathrm{Equation\ 5})$$

[6]

$$\mathbf{X}_{(p)k} = \left[ x_{(p)m,k} \right]_{4\times1} \quad \ldots(\mathrm{Equation\ 6})$$

[7]

$$\mathbf{X}_{(d)k} = \left[ x_{(d)m,k} \right]_{4\times1} \quad \ldots(\mathrm{Equation\ 7})$$

[8]

$$\mathbf{X}_{(DICE)k} = \left[ x_{(DICE)m,k} \right]_{4\times1} \quad \ldots(\mathrm{Equation\ 8})$$

When received signal **R** is divided into received pilot signal $\mathbf{R}_{(p)k}$, received MIMO data signal $\mathbf{R}_{(d)k}$ and received ICE data signal $\mathbf{R}_{(DICE)k}$, these components can be represented by following equation 9.

[9]

$$\begin{cases} \mathbf{R}_{(p),k} = \mathbf{H}_{(p)k}\mathbf{X}_{(p)k} + \mathbf{N}_{(p),k}, & (1 \le k \le 4) \\ \mathbf{R}_{(d),k} = \mathbf{H}_{(d)k}\mathbf{X}_{(d)k} + \mathbf{N}_{(d),k}, & (1 \le k \le N_s - 8) \\ \mathbf{R}_{(DICE),k} = \mathbf{H}_{(DICE),k}\mathbf{X}_{(DICE)k} + \mathbf{N}_{(DICE),k}, & (1 \le k \le 4) \end{cases} \quad \ldots(\mathrm{Equation\ 9})$$

Here, "$N_s$" is the number of symbols in one frame.
Further, pilot signal $\mathbf{X}_{(p)k}$ and ICE data signal $\mathbf{X}_{(DICE)k}$ can be represented by following equation 10.

[10]

$$\mathbf{X}_{(p)k} = \left[ x_{(p)m,k} \right]_{4\times 1} = \begin{cases} x_{(p)m,k} & (if \ m = k) \\ 0 & (if \ m \neq k) \end{cases}$$

$$\mathbf{X}_{(DICE)k} = \left[ x_{(DICE)m,k} \right]_{4\times 1} = \begin{cases} x_{(DICE)m,k} & (if \ m = k) \\ 0 & (if \ m \neq k) \end{cases}$$

...(Equation 10)

In signal extracting sections 153-1 to 153-4, received pilot signal $\mathbf{R}_{(p)k}$ and copy signal $\mathbf{R}_{(DICE)k}$ of an ICE data signal are obtained. In the first channel estimation, only received pilot signal $\mathbf{R}_{(p)k}$ is used. Channel estimation value of stream #m can be calculated using following equation 11. Here, "." is inner product computation and "*" is the complex conjugate. Further, the superscript number is the number of times channel estimation is performed.

[11]

$$\hat{\mathbf{h}}_k^{(1)} = \mathbf{R}_{(p)k} \cdot \mathbf{X}_{(p)k}^*$$

...(Equation 11)

For example, if the channel estimation value in the first channel estimation is used, the channel estimation matrix can be represented by following equation 12.

[12]

$$\hat{\mathbf{H}}^{(1)} = \begin{pmatrix} \hat{\mathbf{h}}_1^{(1)} & \hat{\mathbf{h}}_2^{(1)} & \hat{\mathbf{h}}_3^{(1)} & \hat{\mathbf{h}}_4^{(1)} \end{pmatrix} = \begin{pmatrix} \hat{h}_{11}^{(1)} & \hat{h}_{12}^{(1)} & \hat{h}_{13}^{(1)} & \hat{h}_{14}^{(1)} \\ \hat{h}_{21}^{(1)} & \hat{h}_{22}^{(1)} & \hat{h}_{23}^{(1)} & \hat{h}_{24}^{(1)} \\ \hat{h}_{31}^{(1)} & \hat{h}_{32}^{(1)} & \hat{h}_{33}^{(1)} & \hat{h}_{34}^{(1)} \\ \hat{h}_{41}^{(1)} & \hat{h}_{42}^{(1)} & \hat{h}_{43}^{(1)} & \hat{h}_{44}^{(1)} \end{pmatrix}$$

...(Equation 12)

From the second channel estimation onward, that is, in iterative channel estimation, copy signal $\mathbf{R}_{(DICE)k}$ is used in addition to received pilot signal $\mathbf{R}_{(p)k}$, and, furthermore, extracted ICE data signal $D_{(DICE)k}$ extracted by DICE extracting sections 156-1 to 156-4 is used. Extracted ICE data signal $D_{(DICE)k}$ can be represented by following equation 13.

[13]

$$\mathbf{D}_{(DICE)k} = \mathbf{h}_k^{(1)*} \cdot \mathbf{R}_{(DICE),k}, \ (1 \leq k \leq 4)$$

...(Equation 13)

In tentative deciding section 159, extracted ICE data signal $D_{(DICE)k}$ is tentatively decided and a tentative decision value is obtained. The tentative decision value is remodulated at data remodulating section 160 and a remodulated data signal is obtained. In channel estimating section 161, inner product of the copy signal and the remodulated signal is computed for obtaining channel estimation value for stream #m. As a result of the inner product computation, an instantaneous channel value is obtained. This computation can be represented by following equation 14.

[14]

$$\hat{\mathbf{h}}^{(1)}_{(DICE)k} = \mathbf{R}_{(DICE)k} \cdot \mathbf{X}^*_{(DICE)k} \qquad \dots (\text{Equation 14})$$

Further, processing such as linear interpolation is performed using the channel estimation value in the first channel estimation and the above-described instantaneous channel estimation value to improve response to fading fluctuation, and, as a result, the channel estimation value in the second channel estimation is calculated. By doing so, the channel estimation matrix is updated. Demodulation weight generated by demodulation weight generating section 162 is updated in accordance with the update of channel estimation matrix.

From the third channel estimation onward, similar processing to the above-described processing is performed.

As described above, according to the present embodiment, the ICE data signal is mapped in the ICE data period, the MIMO data signal is mapped in the MIMO data period and the pilot signal is mapped in the pilot period, so that it is possible to avoid a case where all data signals are tentatively decided and reduce the processing load of channel estimation for the MIMO channel.

(Embodiment 2)

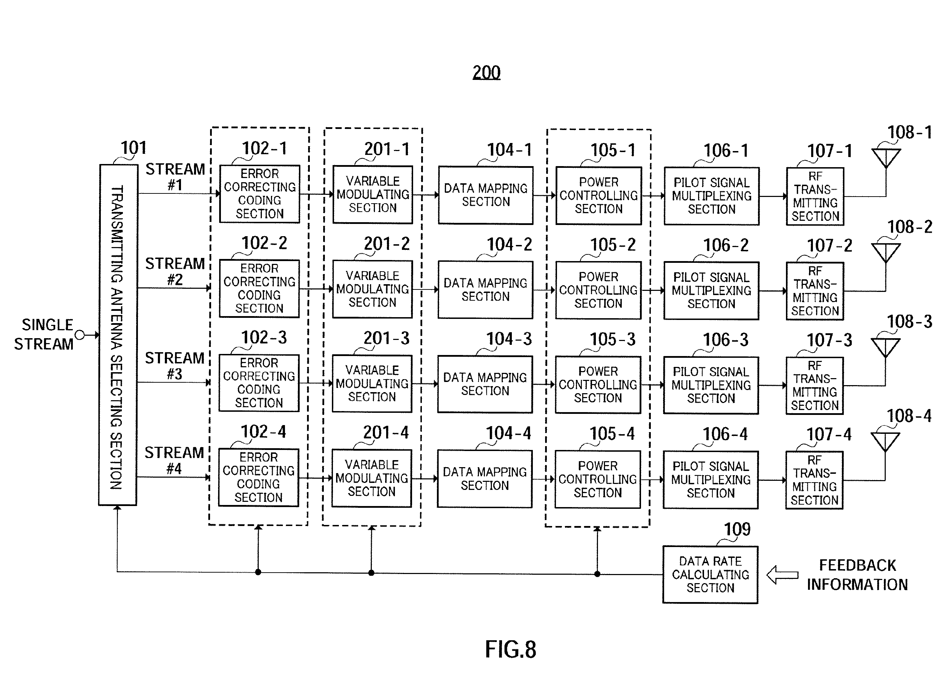

FIG.8 is a block diagram showing the configuration of the radio transmitting apparatus according to Embodiment 2 of the present invention. Here, radio transmitting apparatus 200, which will be described in the present embodiment, has a similar basic configuration to radio transmitting apparatus 100 described in Embodiment 1. Therefore, the same components explained in Embodiment 1 will be assigned the same reference numerals and detailed explanations thereof will be omitted.

Radio transmitting apparatus 200 has a configuration replacing data modulating sections 103-1 to 103-4 in radio transmitting apparatus 100 with variable modulating sections 201-1 to 201-4. Variable modulating sections 201-1 to 201-4 have the same configuration. Therefore, any of these will be referred to as "variable modulating section 201-a".

Although variable modulating section 201-a performs the same operation as data modulating section 103-a, there is a difference between variable modulating section 201-a and data modulating section 103-a in that the ICE data signal is modulated using an M-ary modulation number (also referred to as "modulation level") different from the M-ary modulation number used upon modulating the MIMO data signal.

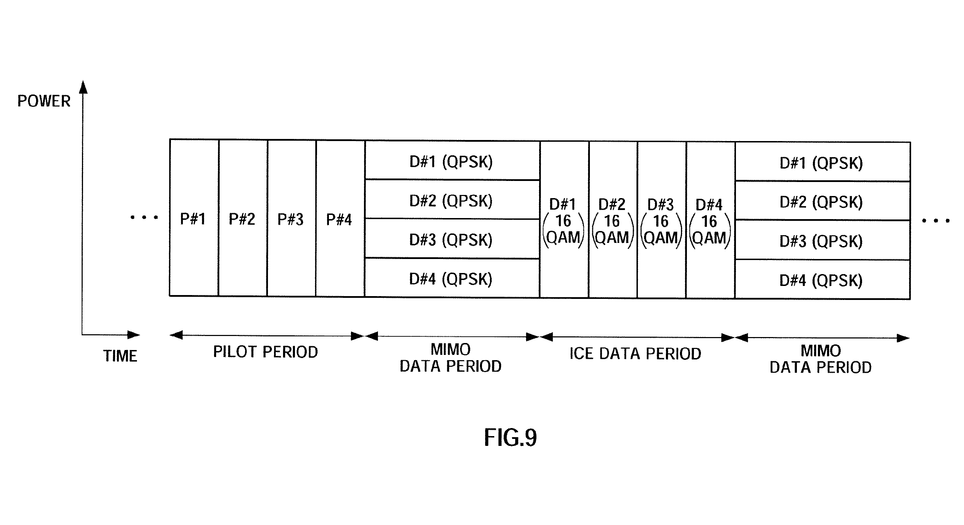

For example, as shown in FIG.5, while the MIMO data signal and the ICE data signal are modulated in the modulation scheme of the same M-ary modulation number in data modulating section 103-a of Embodiment 1, for example, as shown in FIG.9, the MIMO data signal is modulated in QPSK and the ICE data signal is modulated in 16QAM, which has a higher M-ary modulation number than QPSK, in variable modulating section 201-1 of the present embodiment.

As described above, according to the present embodiment, it is possible to reduce data rate degradation in the ICE data period.

Here, a transmission signal transmitted from radio transmitting apparatus 200 of the present embodiment, can be received by a radio receiving apparatus having a similar basic configuration to radio receiving apparatus 150 described in Embodiment 1 of the present invention (not shown). In the radio receiving apparatus, the MIMO data signal and the ICE data signal are demodulated according to the modulation scheme used to modulate each signal.

(Embodiment 3)

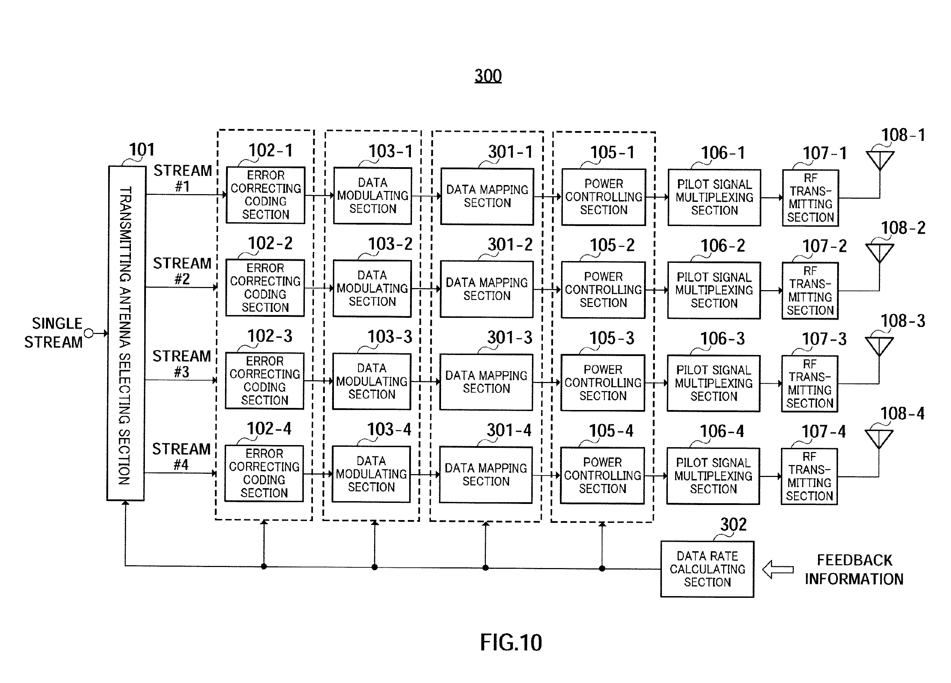

FIG.10 is a block diagram showing the radio transmitting apparatus according to Embodiment 3 of the present invention. Here, radio transmitting apparatus 300, which will be described with the present embodiment, has a similar basic configuration to radio transmitting apparatus 100 described in Embodiment 1. Therefore, the same components explained in Embodiment 1 will be assigned the same reference numerals and detailed explanations thereof will be omitted.

Radio transmitting apparatus 300 has a configuration replacing data mapping sections 104-1 to 104-4 and data rate calculating section 109 in radio transmitting apparatus 100 with data mapping sections 301-1 to 301-4 and data rate calculating section 302, respectively. Data mapping sections 301-1 to 301-4 have the same configuration. Therefore, any of these will be referred to as "data mapping section 301-a".

Data rate calculating section 302 calculates data rates in accordance with the number of transmitting antennas, based on CQI reported in feedback information from radio receiving apparatus 350 described later and based on DICE insertion on/off signal described later. Further, data rate calculating section 302 determines the number of transmitting antennas where the data rate is maximum, and, furthermore, selects the determined number of antennas from antennas 108-1 to 108-4. The data rate calculation is performed on only the MIMO data signal out of the pilot signal, the MIMO data signal and the ICE data signal. CQI and the DICE insertion on/off signal are transmitted from radio transmitting apparatus 300 to radio receiving apparatus 350 in feedforward information in accordance with a transmission signal.

Data mapping section 301-a maps modulated stream #a in a predetermined frame format.

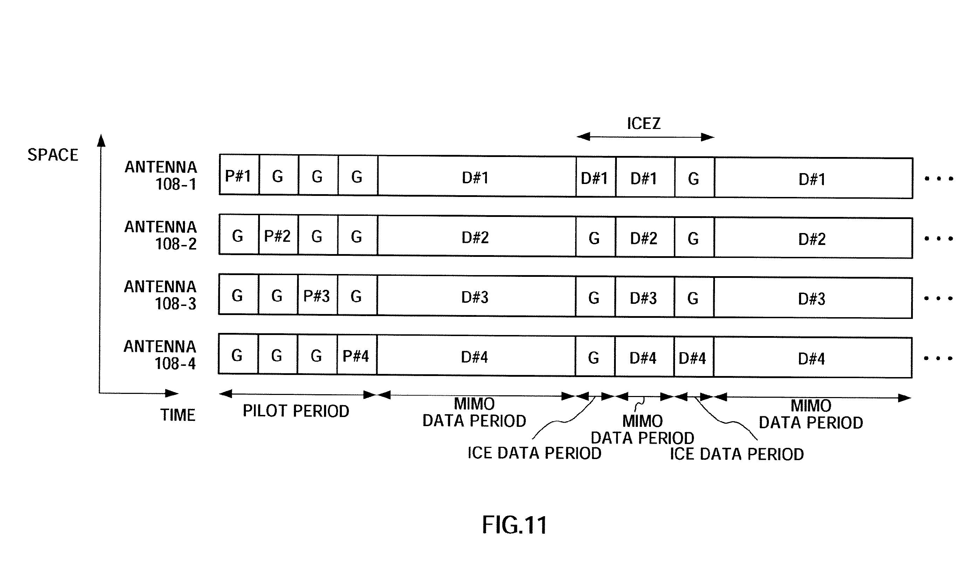

Here, an example of mapping processing will be explained in detail using the transmission frame format shown in FIG.11. FIG.11 illustrates the transmission frame format of transmission signal for one frame using time axis and space axis. In the transmission frame format shown here as an example, a predetermined pilot period, a predetermined MIMO data period and an ICEZ are provided.

When an indication is shown in the DICE insertion on/off signal that the ICE data signal is inserted in stream #a (insertion ON), data mapping section 301-a maps D#a in the zone allocated for stream #a out of the ICEZ (allocation zone #a). Allocation zone #a for datamapping section 301-a is a non-allocation zone for other data mapping sections. Therefore, other data mapping sections map nothing in a non-allocation zone. In other words, a guard signal (G) is mapped in a non-allocation zone. D#a mapped in allocation zone #a is the ICE data signal, which is used in iterative channel estimation. Further, when a guard signal is mapped in the non-allocation zone, the period corresponding to the zone is an ICE data period.

When an indication is shown in the DICE insertion on/off signal that the ICE data signal is not inserted in stream #a (insertion OFF), data mapping section 301-a equally maps D#a in allocation zone #a. Allocation zone #a for data mapping section 301-a is a non-allocation zone for other data mapping sections. However, if "insertion off" is shown in DICE signal with respect to stream #a, data mapping sections other than data mapping section 301-a map data signals in the non-allocation zone on conditions that an antenna corresponding to data mapping section #a is selected by data rate calculating section 302. In this case, D#a mapped in allocation zone #a and data signals mapped in the non-allocation zone are not ICE data signals used in iterative channel estimation but are MIMO data signals not used in iterative channel estimation. Therefore, when a guard signal is mapped in a non-allocation zone, the period corresponding to the zone is the MIMO data period.

When antenna 108-a is selected by data rate calculating section 302, data mapping section 301-a maps D#a in all predetermined MIMO data periods of the transmission signal transmitted by antenna 108-a. D#a mapped in the predetermined MIMO data period is a MIMO data signal and is not used in iterative channel estimation. Further, when antenna 108-a is not selected, data mapping section 301-a does not map D#a in all predetermined MIMO data periods of the transmission signal transmitted by antenna 108-a.

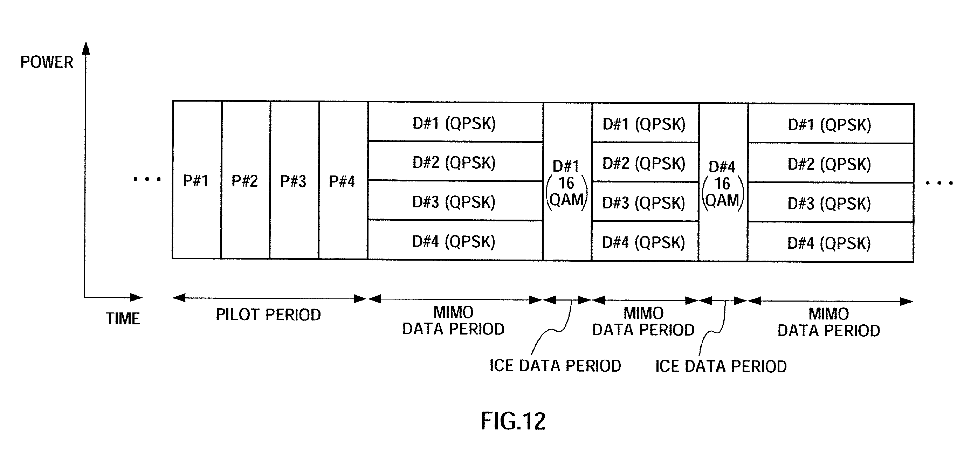

FIG. 12 illustrates a result of transmission power control processing performed on the transmission signal of transmission frame format shown in FIG. 11, as an example. In the example shown in FIG.12, although the MIMO data signal is modulated in QPSK and the ICE data signal is modulated in 16 QAM, modulation schemes to be used are not limited to the above modulation schemes.

In radio transmitting apparatus 300 of the present embodiment, the DICE insertion interval signal can be used instead of or with the DICE insertion on/off signal.

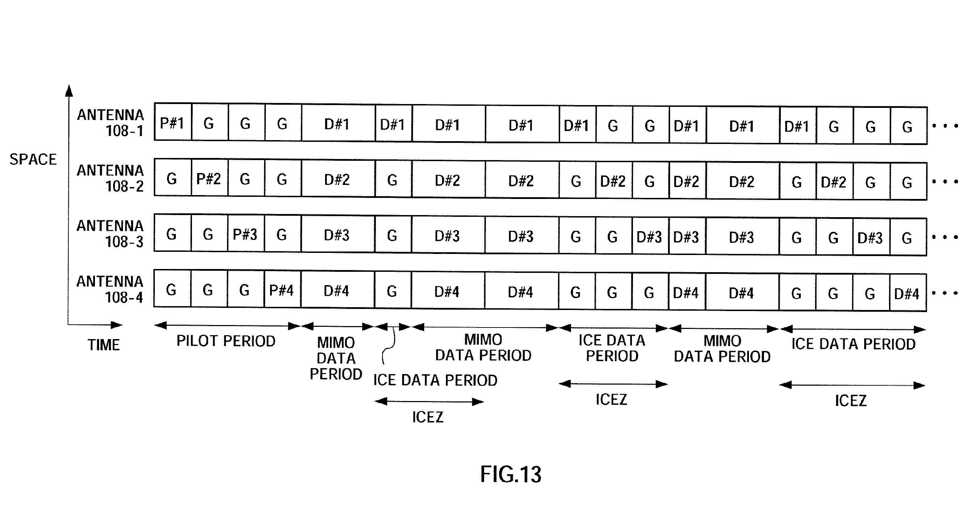

Here, the mapping processing in data mapping section 301-a will be described in more detail, taking an example where the DICE insertion interval signal is used. Similar to the format shown in FIG. 11, transmission frame format shown in FIG.13 has an ICEZ in addition to a predetermined pilot period and a predetermined MIMO data period.

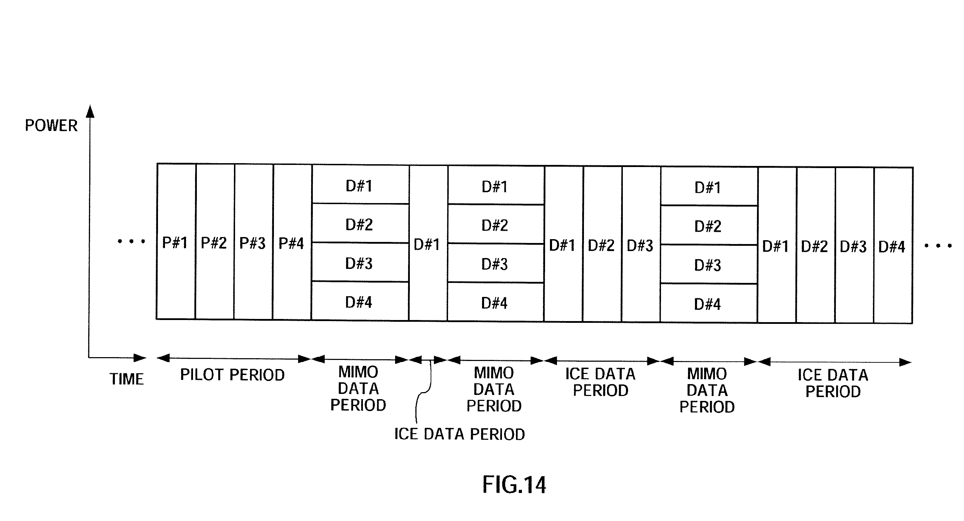

Data mapping section 301-a maps the ICE data signal in the ICEZ at insertion intervals shown in the DICE insertion interval signal. In the ICEZ, a MIMO data signal is mapped in a zone where the ICE data signal is not mapped. In the example shown in FIG.13, the DICE insertion interval for stream #1 is the shortest from streams #1 to #4, the DICE insertion interval for stream #2 is the second shortest, followed by the DICE insertion interval for #3, and the DICE insertion interval for stream #4 is the longest. Thus, the DICE insertion interval can be set variably, on a per stream basis. FIG.14 shows an example of a result of the transmission power control processing performed on the transmission signal of transmission frame format shown in FIG.13.

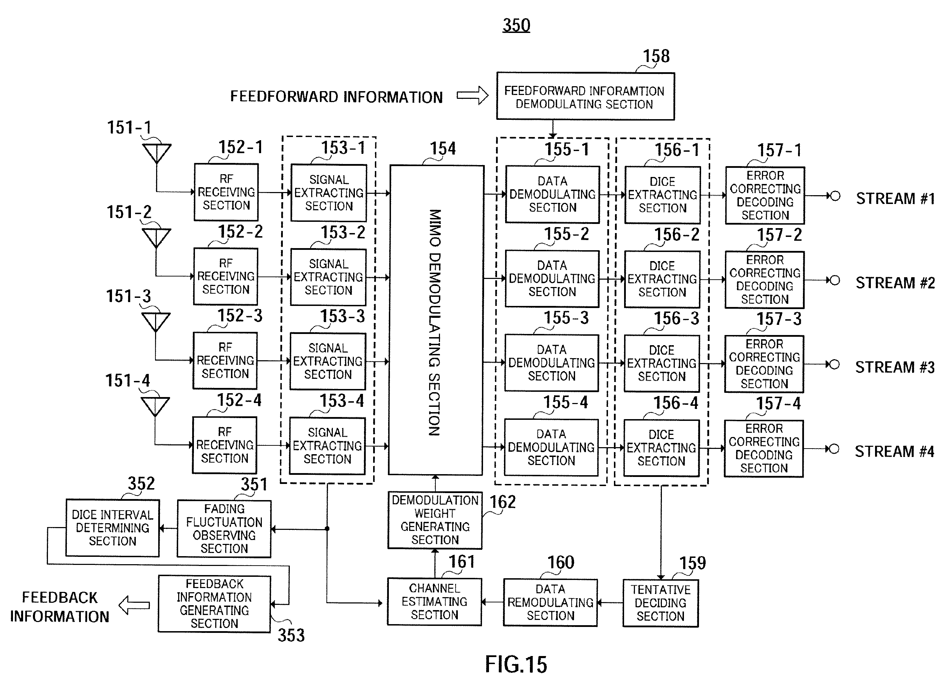

FIG. 15 is a block diagram showing the configuration of the radio receiving apparatus according to Embodiment 3 of the present invention. Radio receiving apparatus 350 of the present embodiment has a configuration that adds fading fluctuation observing section 351, DICE interval determining section 352 and feedback information generating section 353, to radio receiving apparatus 150 described in Embodiment 1.

Fading fluctuation observing section 351 observes the fading fluctuation speed of each substream.

DICE interval determining section 352 determines whether or not to insert the ICE data signal to each stream. In other words, DICE interval determining section 352 adaptively selects an antenna to transmit the ICE data signal, from antennas 108-1 to 108-4, according to fading fluctuation speed. For example, if the observed fading fluctuation speed of the stream transmitted from an antenna is faster than a predetermined level, the insertion of the ICE data signal to the stream is determined to be "on" (performed), and, if the observed fading fluctuation speed is slower than the predetermined level, the insertion of the ICE data signal to the stream is determined to be "off" (not performed). Further, DICE interval determining section 352 can determine insertion interval for the ICE data signal in each stream according to observed fading fluctuation speed.

For example, the ICE data signal insertion interval is made shorter for streams where faster fading fluctuation speed is observed, and the ICE data signal insertion interval is made longer for streams where slower fading fluctuation speed is observed.

Feedback information generating section 353 generates a DICE insertion on/off signal showing the result of determining whether or not to insert the ICE data signal. Further, when ICE data signal insertion interval for the ICE data signal are determined, feedback information generating section 353 generates a DICE insertion interval signal showing that determination result. The generated DICE insertion on/off signal and/or the DICE insertion interval signal is fed back to radio transmitting apparatus 300 in feedback information.

Thus, according to the present embodiment, it is possible to reduce the data rate in the ICE data period and improve response to channel fluctuation.

Further, the configuration of radio transmitting apparatus 300 according to the present embodiment can be implemented in combination with the configuration of radio transmitting apparatus 200 described in Embodiment 2.

(Embodiment 4)

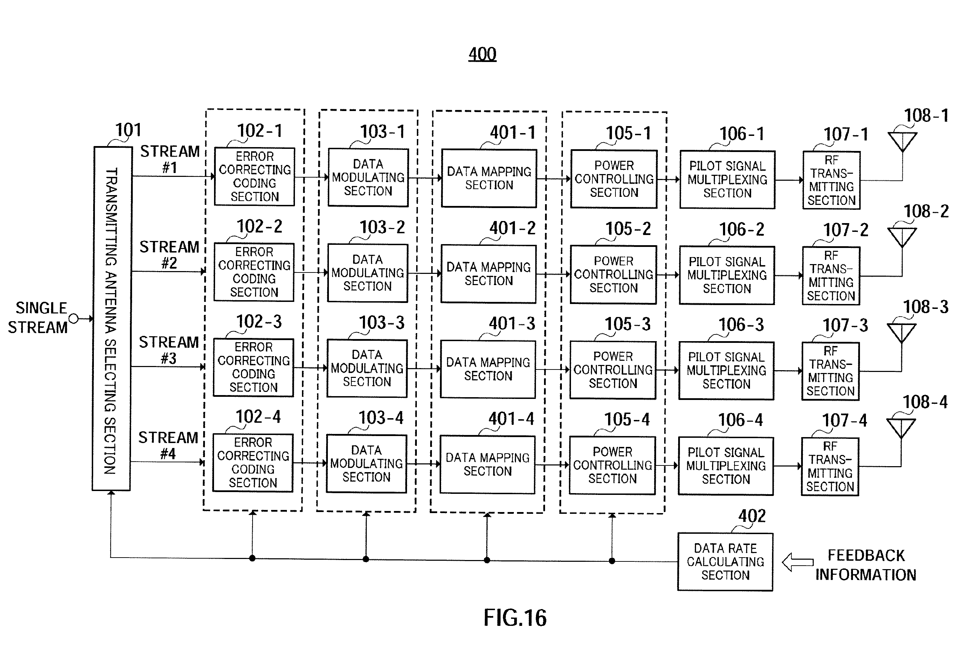

FIG.16 is a block diagram showing the configuration of the radio transmitting apparatus according to Embodiment 4 of the present invention. Here, radio transmitting apparatus 400 which will be described with the present embodiment has a similar basic configuration to radio transmitting apparatus 100 described in Embodiment 1. Therefore, the same components explained in Embodiment 1 are assigned the same reference numerals and detailed explanations thereof will be omitted.

Radio transmitting apparatus 400 has a configuration replacing data rate calculating section 109 and data mapping sections 104-1 to 104-4 in radio transmitting apparatus 100 with data rate calculating section 402 and data mapping sections 401-1 to 401-4, respectively. Data mapping sections 401-1 to 401-4 have the same configuration. Therefore, any of these will be referred to as "data mapping section 401-a".

Data rate calculating section 402 calculates data rates in accordance with the number of transmitting antennas, based on CQI of each antenna reported in feedback information from radio receiving apparatus 450 described later. Further, data rate calculating section 402 determines the number of transmitting antennas where the data rate is maximum, and, furthermore, selects the determined number of antennas from antennas 108-1 to 108-4 . The data rate calculation is performed with respect to only the MIMO data signal out of the pilot signal, the MIMO data signal and the ICE data signal.

Further, data rate calculating section 402 generates quality ranking information, based on CQI of each antenna. The quality ranking information displays the CQI rankings of all antennas. CQI and ranking information of each antenna are transmitted in feedforward information from radio transmitting apparatus 400 to radio receiving apparatus 450 in accordance with a transmission signal.

Data mapping section 401-a maps modulated stream #a in a predetermined frame format.

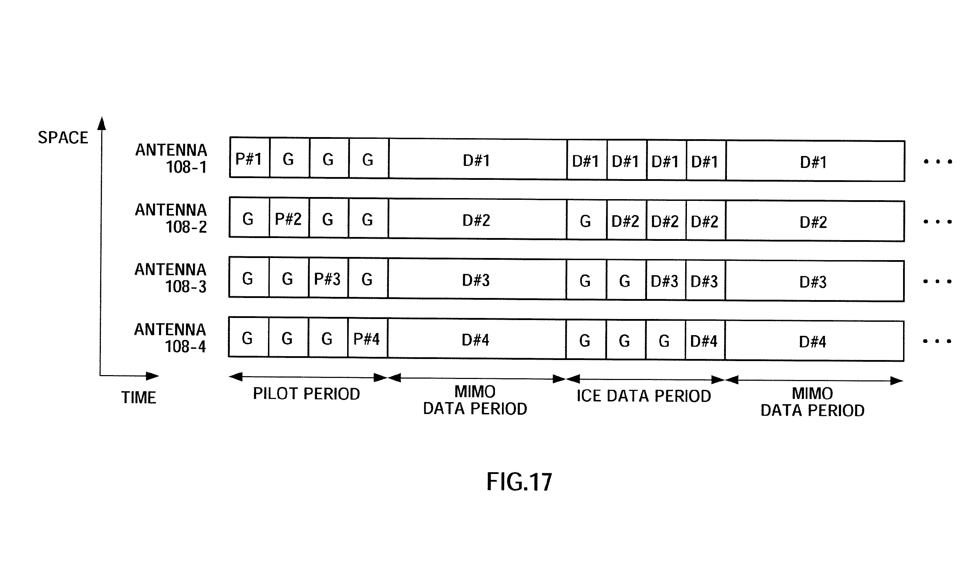

Here, an example of mapping processing will be explained in more detail using the transmission frame format shown in FIG.17. FIG.17 illustrates a transmission frame format of transmission signal for one frame, using time axis and space axis. The transmission signal shown here as an example has a pilot period and a data period, and the data period is composed of a MIMO data period and an ICE data period. The ICE data period is formed into an ICEZ. Further, the ICE data period is divided into four periods. These four periods are referred to as "1 stream multiplex period", "2 stream multiplex period", "3 stream multiplex period" and "4 stream multiplex period", in order from the earliest period on the time axis. Mapping in each stream multiplex period depends on the MIMO demodulation order in SIC (Successive Interference Cancellation). That is, the first stream subjected to MIMO demodulation in the SIC process is mapped in the 1 stream multiplex period. The second stream subjected to MIMO demodulation in the SIC process is mapped in the 2 stream multiplex period, in addition to the stream mapped in the 1 stream multiplex period. The third stream subjected to MIMO demodulation in the SIC process is mapped in the 3 stream multiplex period, in addition to the stream mapped in the 2 stream multiplex period. The fourth (last) stream subjected to MIMO demodulation in the SIC process is mapped in the 4 stream multiplex period, in addition to the streammapped in the 3 stream multiplex period. Here, the mapping in the pilot period and the MIMO data period is the same as the mapping described in Embodiment 1 and detailed explanation thereof will be omitted.

First, data mapping sections 401-1 to 401-4 refer to quality ranking information. For example, assume that the referred quality ranking information shows that "the CQI of the channel formed for transmitting stream #1 from antenna 108-1 is the highest, the CQI of the channel formed for transmitting stream #2 from antenna 108-2 is the second highest, followed by the CQI of the channel formed for transmitting stream #3 from antenna 108-3, and the CQI of the channel formed for transmitting stream #4 from antenna 108-4 is the lowest".

In this case, data mapping section 401-1 maps D#1 as the ICE data signal in the 1 stream multiplex period, the 2 stream multiplex period, the 3 stream multiplex period and the 4 stream multiplex period, that is, all periods in the ICE data period. Further, data mapping section 401-2 maps a guard signal in the 1 streammultiplex period and maps D#2 as the ICE data signal in the 2 stream multiplex period, the 3 stream multiplex period and the 4 stream multiplex period. Further, datamapping section 401-3 maps the guard signal to the 1 stream multiplex period and the 2 stream multiplex period, and maps D#3 as the ICE data signal to the 3 stream multiplex period and the 4 stream multiplex period. Further, data mapping section 401-4 maps a guard signal in the 1 streammultiplex period, the 2 stream multiplex period and the 3 stream multiplex period, and maps D#4 as the ICE data signal in the 4 stream multiplex period.

In this example, a data signal to be transmitted from one antenna (for example, D#1) is mapped in one or more periods in the ICE data period, and a data signal to be transmitted from other antenna (for example, D#2) is mapped between the middle part and the end part of the above-described one or more periods.

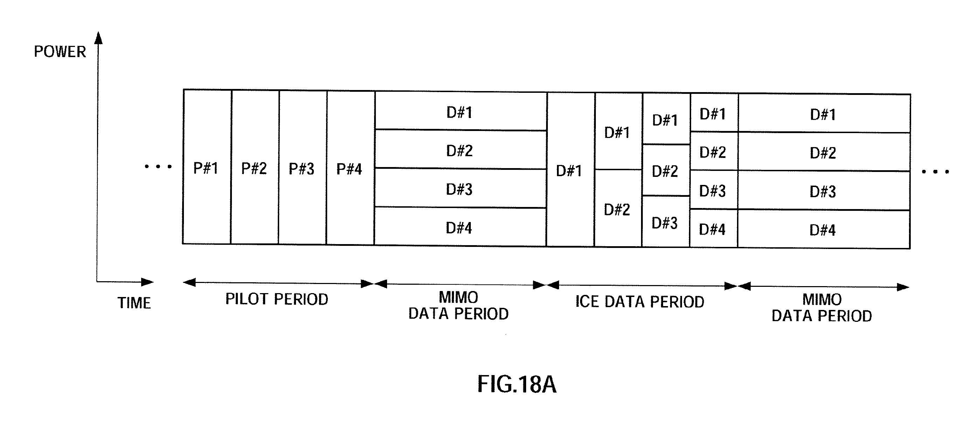

Next, an example of transmission power control processing will be explained in more detail using the transmission frame format shown in FIG.18A. FIG.18A illustrates the transmission frame format shown in FIG.17, using the time axis and an axis showing the magnitude of power. Here, transmission power control in the pilot period and the MIMO data period is the same as the transmission power control described in Embodiment 1 and detailed explanation thereof will be omitted.

In the ICE data period, power control sections 105-1 to 105-4 allocate predetermined total transmission power to a substream or a plurality of substreams. Specifically, all of the total transmission power is allocated to D#1 in the 1 stream multiplex period, half of the total transmission power is allocated to D#1 and D#2 in the 2 stream multiplex period, one third of the total transmission power is allocated to D#1, D#2 and D#3 in the 3 stream multiplex period, and one fourth of the total transmission power is allocated to D#1, D#2, D#3 and D#4 in the 4 stream multiplex period.

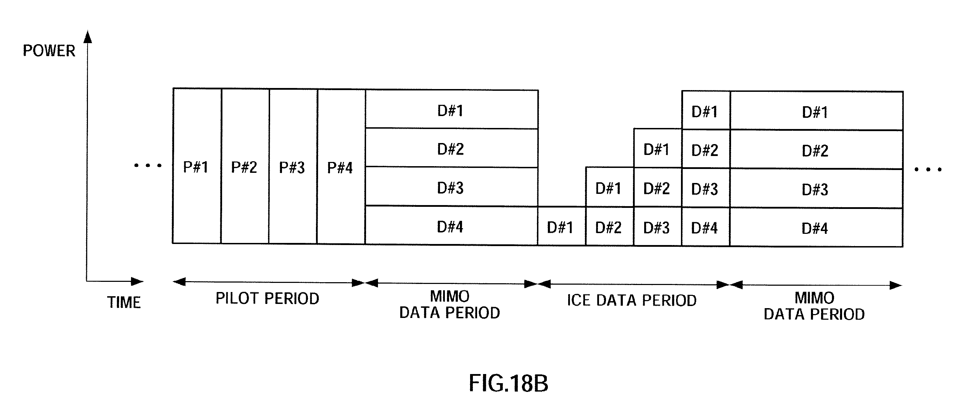

In the example shown in FIG.18A, although total transmission power per period is fixed, as shown in FIG. 18B, transmission power per streammay be equal to transmission power per stream of MIMO data in the MIMO data period.

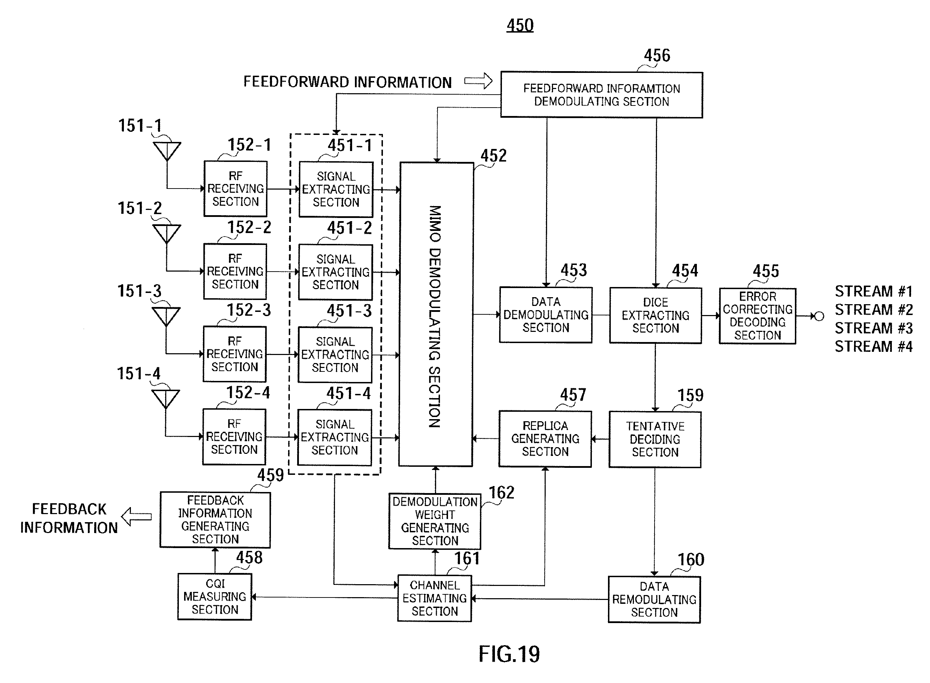

FIG.19 is a block diagram showing the configuration of the radio receiving apparatus according to the present embodiment. Radio receiving apparatus 450 which will be described in the present embodiment has a similar basic configuration to radio receiving apparatus described in Embodiment 1. In addition to antennas 151-1 to 151-4, RF receiving sections 152-1 to 152-4, tentative deciding section 159, data remodulating section 160, channel estimating section 161 and demodulation weight generating section 162, radio receiving apparatus 450 has signal extracting sections 451-1, 451-2, 451-3 and 451-4, MIMO demodulating section 452, data demodulating section 453, DICE extracting section 454, error correcting decoding section 455, feedforward information demodulating section 456, replica generating section 457, CQI measuring section 458 and feedback information generating section 459. Here, signal extracting sections 451-1 to 451-4 have the same configuration. Therefore, any of these will be referred to as "signal extracting section 451-b".

Feed forward information demodulating section 456 demodulates feedforward information transmitted from radio transmitting section 400, reports the MIMO demodulation order to MIMO demodulating section 452 and reports the DICE multiplex positions to signal extracting sections 451-1 to 451-4 and DICE extracting section 454. The MIMO demodulation order shows the order of demodulated streams, and the DICE multiplex position shows the data signal of which stream is mapped to each stream multiplex period in an ICE data period.

Signal extracting section 451-b extracts the pilot signal from BB#b and generates a copy of the ICE data signal. After the pilot signal is extracted, BB#b is outputted to MIMO demodulating section 452, and the extracted pilot signal and the generated copy are outputted to channel estimating section 161.

MIMO demodulating section 452 performs MIMO demodulation on all baseband signals inputted from signal extracting sections 451-1 to 451-4, using demodulation weight generated by demodulation weight generating section 162. The MIMO demodulation order reported from feedforward information demodulating section 456 is used in this MIMO demodulation. First, in the first stage, a stream where the ICE data signal is mapped from the 1 streammultiplex period to the 4 streammultiplex period is demultiplexed, in the second stage, a stream where the ICE data signal is mapped from the 2 stream multiplex period to the 4 stream multiplex period is demultiplexed, in the third stage, a stream where the ICE data signal is mapped from the 3 stream multiplex period to the 4 streammultiplex period, and, finally, in the fourth stage, a stream where the ICE data signal is mapped in only the 4 stream multiplex period is demultiplexed. The received replica generated by replica generating section 457 is used in MIMO demodulation from the second stage to the fourth stage. Further, demodulation weight to be used is updated every stage and its accuracy improves every stage.

Data demodulating section 453 demodulates all streams demodulated by MIMO demodulating section 452, according to the modulation scheme in accordance with the CQI demodulated by feedforward information demodulating section 158.

DICE extracting section 454 extracts the ICE data signal from all of demodulated streams. The extracting operation will be described later in more detail. After the ICE data signal is extracted, all streams are outputted to error correcting decoding section 455, and the extracted ICE data signal is outputted to tentative deciding section 159.

Error correcting decoding section 455 performs error correcting decoding on all streams inputted from DICE extracting section 454.

Replica generating section 457 does not operate in the above-described first stage in MIMO demodulation.

Further, from the second stage in MIMO demodulation onward, replica generating section 457 generates a replica of the stream demultiplexed at the previous stage.

CQI measuring section 458 measures CQI explained in the previous embodiment, based on the result of channel estimation by channel estimating section 161. Feedback information generating section 459 generates feedback information from the measured CQI. The generated feedback information is transmitted to radio transmitting apparatus 400.

Here, a DICE extracting operation at DCIE extracting section 454 will be described in more detail.

DICE extracting section 454 extracts ICE data signals in the CQI ranking order.

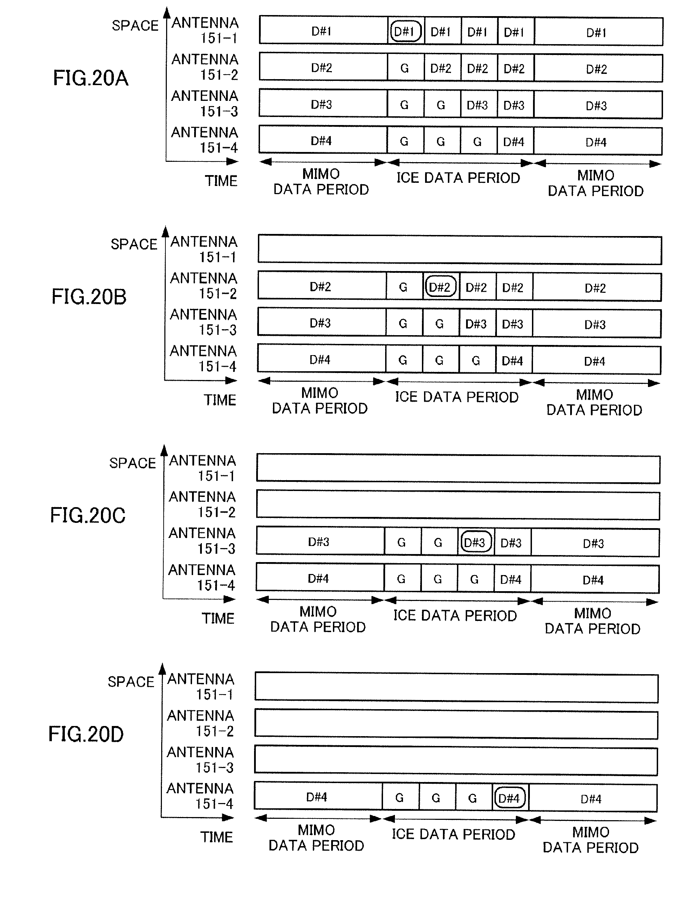

First, in the first stage, as shown in FIG.20A, the data signal mapped to the 1 stream multiplex period in the ICE data period, that is, D#1, is extracted. Next, in the second stage, as shown in FIG. 20B, stream #1 corresponding to antenna 151-1 is already removed, and the data signal mapped to the 2 stream multiplex period in the ICE data period, that is, D#2, is extracted. Following the second stage, in the third stage, as shown in FIG.20C, stream #2 corresponding to antenna 151-2 is further removed, and the data signal mapped to the 3 stream multiplex period in the ICE data period, that is, D#3, is extracted. Finally, in the fourth stage, as shown in FIG.20D, stream #3 corresponding to antenna 151-3 is further removed, and the data signal mapped to the 4 stream multiplex period in the ICE data period, that is, D#4, is extracted.

As described above, according to the present embodiment, a data signal to be transmitted from one antenna (for example, D#1) is mapped to one or more periods in the ICE data period as an ICE data signal, and a data signal to be transmitted from other antenna (for example, D#2) is mapped between the middle part and the end part of the above-described one or more periods as the ICE data signal. Further, according to the present embodiment, ICE data signals are mapped by data mapping sections 401-1 to 401-4, such that the number of antennas that transmit ICE data signals gradually increase over the ICE data periods. By doing so, like above-described radio receiving apparatus 450, MIMO demodulation with SIC (for example, BLAST(Bell laboratory layered space time)) can be performed on the ICE data signal, so that it is possible to update a channel estimation value every stage and improve the accuracy of demodulation of received data signals.

Further, the configuration of radio transmitting apparatus 400 and radio receiving apparatus 450 described in the present embodiment can be implemented in combination with the configuration of radio transmitting apparatus 200 described in Embodiment 2 and radio receiving apparatus 350 described in Embodiment 3.

Furthermore, each function block employed in the description of each of the aforementioned embodiments may typically be implemented as an LSI constituted by an integrated circuit. These may be individual chips or partially or totally contained on a single chip.

"LSI" is adopted here but this may also be referred to as "IC", "system LSI", "super LSI", or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells in an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese Patent Application No.2005-163701, filed on June 3, 2005, the entire content of which is expressly incorporated by reference herein.

Industrial Applicability

The radio transmitting apparatus, radio receiving apparatus and signal mapping method of the present invention are applicable to base station apparatus and mobile station apparatus in radio communication systems.

**Claims**

1. A radio transmitting apparatus that transmits a transmission signal including a pilot signal period and a data signal period, comprising:

    a plurality of antennas;
    a generating section that generates the transmission signal by mapping a first data signal used in iterative channel estimation to a first period in the data signal period and a second data signal not used in iterative channel estimation to a second period in the data signal period; and

a transmission section that transmits the transmission signal generated by the generating section from the plurality of antennas.

2.  The radio transmitting apparatus according to claim 1, wherein:

    the transmission signal is composed of a plurality of signal sequences;
    the plurality of signal sequences comprise data signals to be transmitted respectively from the plurality of antennas; and
    the generating section maps a data signal to be transmitted from one of the plurality of antennas to a specific part in the first period as a first data signal and
    does not map data signals to be transmitted from the other ones of the plurality of antennas to the specific part.

3.  The radio transmitting apparatus according to claim 2, wherein the generating section maps the data signal to be transmitted from the one of the plurality of antennas in a period provided at variable intervals as first data signals.

4.  The radio transmitting apparatus according to claim 2, wherein the generating section maps the data signal to be transmitted from a first antenna of the plurality of antennas and a data signal to be transmitted from a second antenna of the plurality of antennas to non-overlapping parts in the first period as the first data signal.

5.  The radio transmitting apparatus according to claim 4, further comprising a determining section that determines intervals of a period where a data signal to be transmitted from the first antenna is mapped as the first data signal and intervals of a period where a data signal to be transmitted from the second antenna is mapped as the first data signal, individually,
    wherein the generating section maps the data signal to be transmitted from the first antenna and the data signal to be transmitted from the second antenna to the respective periods provided at different and variable intervals as first data signals.

6.  The radio transmitting apparatus according to claim 2, wherein the generating section maps the data signal to be transmitted from an antenna adaptively selected from the plurality of antennas to the first period as the first data signal.

7.  The radio transmitting apparatus according to claim 6, wherein the generating section maps the data signal to be transmitted from the selected antenna to a period provided at variable intervals as the first data signal.

8.  The radio transmitting apparatus according to claim 2, wherein:

    the transmission signal is composed of a plurality of signal sequences;
    the plurality of signal sequences comprise data signals to be transmitted respectively from the plurality of antennas; and
    the generating section maps the data signal to be transmitted from the first antenna of the plurality of antennas, to one or more periods in the first period as the first data signal, and
    maps the data signal to be transmitted from the second antenna of the plurality of antennas as the first data signal, between a middle part and an end part of the one or more periods in the first period.

9.  The radio transmitting apparatus according to claim 8, wherein the generating section gradually increases the number of antennas transmitting the first data signal in the first period.

10. The radio transmitting apparatus according to claim 1, wherein:

    the transmission signal comprises the plurality of signal sequences;
    the plurality of signal sequences comprise data signals to be transmitted respectively from the plurality of antennas; and
    the apparatus further comprises a power control section that sets transmission power in the first period of one of the plurality of signal sequences including a data signal to be transmitted from one of the plurality of antennas, higher than transmission power in the second period of the one of the plurality of signal sequences.

11. The radio transmitting apparatus according to claim 1, wherein:

    the transmission signal comprises the plurality of signal sequences;

the plurality of signal sequences comprise data signals to be transmitted respectively from the plurality of antennas; and

the apparatus further comprises a power control section that sets transmission power in the first period of one of the plurality of signal sequences including a data signal to be transmitted from one of the plurality of antennas, equal to total transmission power in the second period of the plurality of signal sequences.

12. The radio transmitting apparatus according to claim 1, wherein:

the transmission signal comprises the plurality of signal sequences;

the plurality of signal sequences comprise data signals to be transmitted respectively from the plurality of antennas; and

the apparatus further comprises a modulating section that sets M-ary modulation number in the first period of signal sequence including a data signal to be transmitted from one of the plurality of antennas, higher than the M-ary modulation number in the second period of one of the plurality of signal sequences.

13. The radio transmitting apparatus according to claim 1, wherein the generating section generates the transmission signal comprising the first period placed apart from the pilot signal period and the second period placed between the pilot signal period and the first period.

14. The radio transmitting apparatus according to claim 12, wherein the generating section generates the transmission signal comprising the second period placed immediately before and immediately after the first period.

15. A radio receiving apparatus comprising:

a plurality of antennas;

a receiving section that receives by the plurality of antennas a received signal comprising a pilot signal period and a data signal period where a first data signal is mapped to a first period in the data period and a second data signal is mapped to a second period in the data period; and

a channel estimating section that per forms iterative channel estimation using only the first data signal, out of the first data signal and the second data signal.

16. A signal mapping method that maps a signal to a frame format having a pilot signal period and a data signal period, the method comprising the steps of:

mapping a pilot signal to the pilot signal period;

mapping a first data signal used in iterative channel estimation to a first period in the data signal period; and

mapping a second signal not used in iterative channel estimation to a second period in the data signal period.

PILOT SIGNAL FOR
CHANNEL A

GUARD SIGNAL

FRAME
CONFIGURATION IN
CHANNEL A

| P | G | DATA SYMBOL | P | G | DATA SYMBOL A | P | G |

FRAME
CONFIGURATION IN
CHANNEL B

| G | P | DATA SYMBOL | G | P | DATA SYMBOL B | G | P |

PILOT SIGNAL FOR
CHANNEL B

→ TIME

FIG.1

| RECEIVED SYMBOL | |
|---|---|
| PILOT | DATA |

FIG.2

FIG.3

EP 1 879 320 A1

FIG.4

POWER

| P#1 | P#2 | P#3 | P#4 | D#1 (QPSK) | D#1 (QPSK) | D#2 (QPSK) | D#3 (QPSK) | D#4 (QPSK) | D#1 (QPSK) |

D#1 (QPSK)

D#2 (QPSK)

D#3 (QPSK)

D#4 (QPSK)

D#1 (QPSK)

D#2 (QPSK)

D#3 (QPSK)

D#4 (QPSK)

TIME

PILOT PERIOD

MIMO DATA PERIOD

ICE DATA PERIOD

MIMO DATA PERIOD

FIG.5

FIG.6

EP 1 879 320 A1

170

158

FEEDFORWARD INFORMATION ⇒ FEEDFORWARD INFORAMTION DEMODULATING SECTION

151-1

152-1 | 153-1 | 154 | 155-1 | 157-1 | 156-1

RF RECEIVING SECTION | SIGNAL EXTRACTING SECTION | MIMO DEMODULATING SECTION | DATA DEMODULATING SECTION | ERROR CORRECTING DECODING SECTION | DICE EXTRACTING SECTION → STREAM #1

151-2

152-2 | 153-2 | 155-2 | 157-2 | 156-2

RF RECEIVING SECTION | SIGNAL EXTRACTING SECTION | DATA DEMODULATING SECTION | ERROR CORRECTING DECODING SECTION | DICE EXTRACTING SECTION → STREAM #2

151-3

152-3 | 153-3 | 155-3 | 157-3 | 156-3

RF RECEIVING SECTION | SIGNAL EXTRACTING SECTION | DATA DEMODULATING SECTION | ERROR CORRECTING DECODING SECTION | DICE EXTRACTING SECTION → STREAM #3

151-4

152-4 | 153-4 | 155-4 | 157-4 | 156-4

RF RECEIVING SECTION | SIGNAL EXTRACTING SECTION | DATA DEMODULATING SECTION | ERROR CORRECTING DECODING SECTION | DICE EXTRACTING SECTION → STREAM #4

DEMODULATION WEIGHT GENERATING SECTION 162

161 | 160 | 159

CHANNEL ESTIMATING SECTION | DATA REMODULATING SECTION | TENTATIVE DECIDING SECTION

FIG.7

FIG.8

EP 1 879 320 A1

EP 1 879 320 A1

POWER

| P#1 | P#2 | P#3 | P#4 | D#1 (QPSK) | | | | | D#1 (QPSK) |
| | | | | D#2 (QPSK) | D#1 (16 QAM) | D#2 (16 QAM) | D#3 (16 QAM) | D#4 (16 QAM) | D#2 (QPSK) |
| | | | | D#3 (QPSK) | | | | | D#3 (QPSK) |
| | | | | D#4 (QPSK) | | | | | D#4 (QPSK) |

TIME

PILOT PERIOD ◄──────► MIMO DATA PERIOD ◄──────► ICE DATA PERIOD ◄──────► MIMO DATA PERIOD

FIG.9

300

FIG.10

EP 1 879 320 A1

FIG.11

EP 1 879 320 A1

POWER

TIME

| P#1 | P#2 | P#3 | P#4 | D#1 (QPSK) | D#1 (16 QAM) | D#1 (QPSK) | D#4 (16 QAM) | D#1 (QPSK) |
|---|---|---|---|---|---|---|---|---|
| | | | | D#2 (QPSK) | | D#2 (QPSK) | | D#2 (QPSK) |
| | | | | D#3 (QPSK) | | D#3 (QPSK) | | D#3 (QPSK) |
| | | | | D#4 (QPSK) | | D#4 (QPSK) | | D#4 (QPSK) |

PILOT PERIOD ⟷ MIMO DATA PERIOD ⟷ MIMO DATA PERIOD ⟷ MIMO DATA PERIOD

ICE DATA PERIOD    ICE DATA PERIOD

FIG.12

FIG.13

FIG.14

EP 1 879 320 A1

350

FEEDFORWARD INFORMATION ⇒

| 151-1, 151-2, 151-3, 151-4 | antennas |
| 152-1 / 152-2 / 152-3 / 152-4 | RF RECEIVING SECTION |
| 153-1 / 153-2 / 153-3 / 153-4 | SIGNAL EXTRACTING SECTION |
| 154 | MIMO DEMODULATING SECTION |
| 155-1 / 155-2 / 155-3 / 155-4 | DATA DEMODULATING SECTION |
| 156-1 / 156-2 / 156-3 / 156-4 | DICE EXTRACTING SECTION |
| 157-1 / 157-2 / 157-3 / 157-4 | ERROR CORRECTING DECODING SECTION |

STREAM #1
STREAM #2
STREAM #3
STREAM #4

158 FEEDFORWARD INFORAMTION DEMODULATING SECTION

159 TENTATIVE DECIDING SECTION

160 DATA REMODULATING SECTION

161 CHANNEL ESTIMATING SECTION

162 DEMODULATION WEIGHT GENERATING SECTION

351 FADING FLUCTUATION OBSERVING SECTION

352 DICE INTERVAL DETERMINING SECTION

353 FEEDBACK INFORMATION GENERATING SECTION

FEEDBACK INFORMATION ⇒

FIG.15

29

FIG.16

EP 1 879 320 A1

EP 1 879 320 A1

SPACE

| ANTENNA 108-1 | P#1 | G | G | G | D#1 | D#1 | D#1 | D#1 | D#1 | D#1 | · · · |
| ANTENNA 108-2 | G | P#2 | G | G | D#2 | G | D#2 | D#2 | D#2 | D#2 | · · · |
| ANTENNA 108-3 | G | G | P#3 | G | D#3 | G | G | D#3 | D#3 | D#3 | · · · |
| ANTENNA 108-4 | G | G | G | P#4 | D#4 | G | G | G | D#4 | D#4 | · · · |

TIME

PILOT PERIOD ⟷ MIMO DATA PERIOD ⟷ ICE DATA PERIOD ⟷ MIMO DATA PERIOD

FIG.17

EP 1 879 320 A1

POWER

| P#1 | P#2 | P#3 | P#4 | D#1 | D#1 | | D#1 | D#1 | D#1 |
| | | | | D#2 | | D#1 | | D#2 | D#2 |
| | | | | D#3 | | | D#2 | D#3 | D#3 |
| | | | | D#4 | | D#2 | D#3 | D#4 | D#4 |

· · ·

· · ·

TIME

| PILOT PERIOD | MIMO DATA PERIOD | ICE DATA PERIOD | MIMO DATA PERIOD |

FIG.18A

POWER

| P#1 | P#2 | P#3 | P#4 |

| D#1 |
| D#2 |
| D#3 |
| D#4 | D#1 | D#2 | D#3 | D#4 |

| D#1 | D#1 |
| D#1 | D#2 | D#2 |
| D#2 | D#3 | D#3 |
| D#3 | D#4 | D#4 |

TIME

PILOT PERIOD · MIMO DATA PERIOD · ICE DATA PERIOD · MIMO DATA PERIOD

FIG.18B

FIG.19

FIG.20A

FIG.20B

FIG.20C

FIG.20D

### INTERNATIONAL SEARCH REPORT

| | |
|---|---|
| International application No.<br>PCT/JP2006/310982 | |

**A.  CLASSIFICATION OF SUBJECT MATTER**
*H04J15/00*(2006.01)i, *H04B7/04*(2006.01)i

According to International Patent Classification (IPC) or to both national classification and IPC

**B.  FIELDS SEARCHED**

Minimum documentation searched (classification system followed by classification symbols)
H04J15/00, H04B7/04

Documentation searched other than minimum documentation to the extent that such documents are included in the fields searched
Jitsuyo Shinan Koho          1922-1996      Jitsuyo Shinan Toroku Koho     1996-2006
Kokai Jitsuyo Shinan Koho     1971-2006      Toroku Jitsuyo Shinan Koho     1994-2006

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y<br><br>A | JP 2003-338802 A  (Matsushita Electric<br>Industrial Co., Ltd.),<br>28 November, 2003 (28.11.03),<br>Fig. 1<br>& WO 2003/043222 A1      & KR 2004025686 A<br>& KR 2004026661 A      & KR 2004026662 A<br>& EP 1445874 A1      & AU 2002349767 A1<br>& CN 1515088 A      & CN 1515092 A<br>& US 2004/0259508 A1      & CN 1547815 A | 1,2,4,8,10,<br>11,13,15,16<br>3,5-7,9,12,<br>14 |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    22 August, 2006 (22.08.06) | Date of mailing of the international search report<br>    29 August, 2006 (29.08.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/310982

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 11-243434 A  (Matsushita Electric Industrial Co., Ltd.),<br>07 September, 1999 (07.09.99),<br>Par. Nos. [0004] to [0006]; Fig. 4<br>& EP 933904 A2          & JP 11-220505 A<br>& CN 1243372 A          & KR 99068217 A<br>& JP 3233092 B2         & JP 2001-358789 A<br>& JP 2002-124998 A      & KR 331012 B<br>& US 2003/039322 A1     & JP 3489570 B2<br>& JP 3489574 B2         & EP 933904 B1<br>& US 2005/0152474 A1    & JP 2004-007785 A<br>& JP 2004-007786 A      & JP 2005-073303 A<br>& JP 2006-060870 A | 1,2,4,8,10,<br>11,13,15,16 |
| Y | JP 08-265293 A  (Toshiba Corp.),<br>11 October, 1996 (11.10.96),<br>Par. No. [0010], [0035] to [0037]; Fig. 1<br>& EP 734132 A2          & CA 2171418 A<br>& CN 1138256 A          & US 5771224 A<br>& KR 197846 B1          & JP 3145003 B2<br>& EP 734132 B1 | 1,2,4,8,10,<br>11,13,15,16 |
| Y | JP 2005-073221 A  (Matsushita Electric Industrial Co., Ltd.),<br>17 March, 2005 (17.03.05),<br>Full text; all drawings<br>& WO 2005/015799 A1     & EP 1641164 A1<br>& JP 2006-129529 A | 10,11 |

Form PCT/ISA/210 (continuation of second sheet) (April 2005)

**EP 1 879 320 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002217752 A
- JP 2003338802 A
- JP 2000082978 A
- JP 2005163701 A